# EUROPÄISCHE PATENTANMELDUNG

(11) **EP 3 543 558 A1**
(43) Veröffentlichungstag der Anmeldung: **25.09.2019**
(21) Anmeldenummer: 19162710.8
(22) Anmeldetag: 14.03.2019
(51) Int. Cl.: F16F 9/36

(54) **KOLBENSTANGENFÜHRUNG**

(30) Priorität: 23.03.2018 DE 102018204465
(71) Anmelder: ZF Friedrichshafen AG, 88046 Friedrichshafen (DE)
(72) Erfinder: Nowotka, Thomas, 97494 Bundorf (DE); Jaeckel, Rainer, 97525 Schwebheim (DE); Memmel, Georg, 97422 Schweinfurt (DE)

(57) **Zusammenfassung**

Es wird eine Kolbenstangenführung zum Führen und zum gleitenden Lagern einer aus einem Zylinderrohr eines Schwingungsdämpfers eines Kraftfahrzeugs zumindest teilweise heraustretenden Kolbenstange angegeben, wobei die Kolbenstangenführung zumindest abschnittsweise aus einem Kunststoff hergestellt ist, welcher mindestens eine erste Komponente und mindestens eine zweite Komponente umfasst. Die Erfindung zeichnet sich dadurch aus, dass die erste Komponente des Kunststoffs ein Bindemittel ist und die zweite Komponente des Kunststoffs eine hohe Wärmeleitfähigkeit besitzt.

## Beschreibung

Die Erfindung betrifft eine Kolbenstangenführung gemäß dem Oberbegriff des Patentanspruchs 1.

Eine gattungsbildende Kolbenstangenführung zum Führen und zum gleitenden Lagern einer aus einem Zylinderrohr eines Schwingungsdämpfers eines Kraftfahrzeugs zumindest teilweise heraustretenden Kolbenstange ist hinlänglich bekannt. Es sind ebenfalls Kolbenstangenführungen bekannt, welche zumindest abschnittsweise aus einem Kunststoff hergestellt sind. Diese sind kostengünstig produzierbar und weisen ein kleineres Gewicht auf als die aus einem Metall hergestellten Kolbenstangenführungen.

Ein Kraftfahrzeugschwingungsdämpfer hat die Aufgabe die von dem unebenen Straßenbelag angeregten Schwingungen zu dämpfen. Die durch die Straßenunebenheiten angeregten Schwingungen werden konstruktionsbedingt auf die Kolbenstange übertragen, welche sich axial bewegt und teilweise in das Zylinderrohr eintaucht, bzw. aus diesem herausgleitet. Die Bewegungsfrequenz der Kolbenstange ist von den Unebenheiten des Straßenbelags abhängig und kann zum Teil sehr hoch sein. Durch die vorstehend erläuterte axiale Bewegungen der Kolbenstange werden sowohl die Kolbenstangenführung inklusive Kolbenstangendichtung, als auch die Kolbenstange stark beansprucht, da eine Reibung an der Lagerstelle nicht vollständig ausgeschlossen werden kann und da dadurch eine hohe Temperatur entsteht, welche von der Kolbenstangenführung auf die Kolbenstange übertragen wird.

Die Aufgabe der vorliegenden Erfindung ist es somit eine Kolbenstangenführung zum Führen und zum gleitenden Lagern einer Kolbenstange eines Kraftfahrzeugschwingungsdämpfers anzugeben, welche die thermische Belastung an der Kontaktstelle von Kolbenstange und Kolbenstangenführung reduziert.

Diese Aufgabe wird durch die Kolbenstangenführung aus Kunststoff gelöst, welche gemäß Patentanspruch 1 ausgebildet ist.

Weitere vorteilhafte Ausführungsvarianten sind in den abhängigen Ansprüchen, sowie in den Figuren angegeben.

Wenn das Kunststoff aus dem die Kolbenstangenführung ausgebildet ist mindestens eine erste Komponente und mindestens eine zweite Komponente umfasst, wobei die erste Komponente des Kunststoffs ein Bindemittel ist und die zweite Komponente des Kunststoffs eine hohe Wärmeleitfähigkeit besitzt, wobei der Gewichtsanteil der zweiten Komponente gegenüber der ersten Komponente mindestens 40% umfassen kann, so kann die an der Kontaktstelle von der Kolbenstange und der Kolbenstangenführung entstehende Temperatur an das Zylinderrohr abtransportiert werden, was die thermische Belastung an der Kontaktstelle von Kolbenstange und Kolbenstangenführung deutlich reduziert.

Gemäß in abhängigen Ansprüchen dargestellten vorteilhaften Ausführungsvarianten kann die zweite Komponente Graphit oder auch Metallpartikel umfassen, wodurch eine hohe Wärmeleitfähigkeit der Kolbenstangenführung erreicht werden kann.

Das Kunststoff kann vorteilhafter Weise ein Thermoplast sein, was die Herstellung einer Kolbenstangenführung mit der benötigten Außengeometrie beispielsweise durch ein Spritzgussverfahren ermöglicht, was die Herstellungskosten reduziert.

Alternativ kann die Kolbenstangenführung gemäß einer weiteren vorteilhaften Ausführungsvariante aus einem Duroplast gefertigt werden.

Darüber hinaus ist es höchst vorteilhaft für die Herstellung der Kolbenstangenführung einen eine hohe Wärmeformbeständigkeit sowie eine hohe Temperaturfestigkeit aufweisenden Kunststoff zu verwenden, da dadurch die Robustheit und die Dauerhaltbarkeit der Kolbenstangenführung erhöht und vorzeitige Ausfälle des Kraftfahrzeugschwingungsdämpfers vorgebeugt werden.

Gemäß folgenden Figuren soll die Erfindung nun näher erläutert werden.

Es zeigen:
- Fig. 1:: einen Kraftfahrzeugschwingungsdämpfer umfassend eine erfindungsgemäße Kolbenstangenführung;
- Fig. 2:: eine erste Ausführungsvariante einer Kolbenstangenführungsanordnung, umfassend eine erfindungsgemäße Kolbenstangenführung;
- Fig. 3:: eine weitere Ausführungsvariante einer Kolbenstangenführungsanordnung, umfassend eine erfindungsgemäße Kolbenstangenführung.

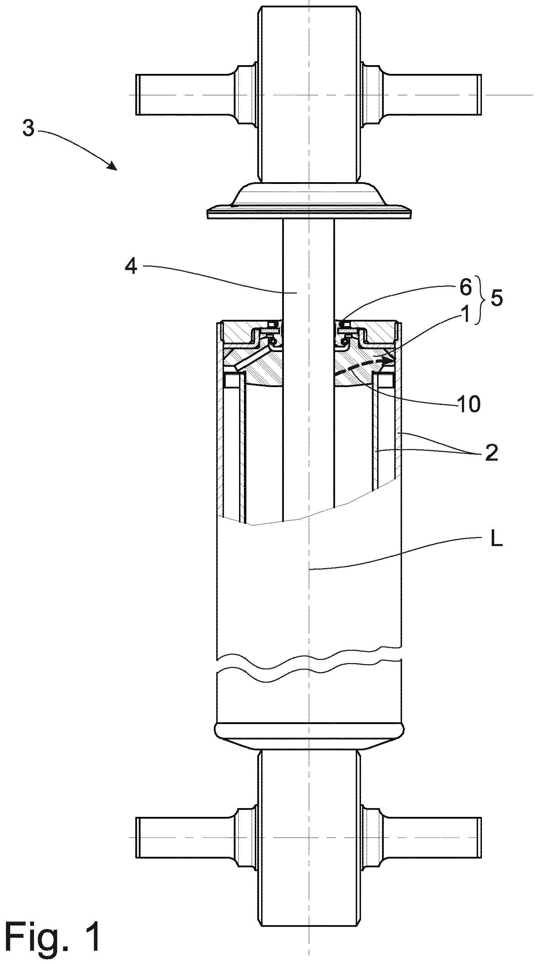

Die Fig. 1 zeigt einen Kraftfahrzeugschwingungsdämpfer 3. Der Bereich der Kolbenstangenführung 1 ist dabei als eine Schnittdarstellung abgebildet. Der Schwingungsdämpfer umfasst eine Kolbenstangenführung 1, welche eine aus dem Zylinderrohr 2 des Kraftfahrzeugschwingungsdämpfers 3 teilweise heraustretende Kolbenstange 4 führt und gleitend Lagert. Die Kolbenstangenführung ist ein Bestandteil einer Kolbenstangenführungsanordnung 5, welche ebenfalls eine Kolbenstangendichtung 6 umfasst, wobei diese die aus dem Zylinderrohr 2 herausragende Kolbenstange 4 abdichtet.

Es ist vorgesehen, dass die Kolbenstangenführung 1 aus einem Kunststoff hergestellt ist, welches mindestens zwei Komponenten umfasst, wobei eine erste Komponente des Kunststoffs ein Bindemittel ist und die zweite Komponente des Kunststoffs eine hohe Wärmeleitfähigkeit besitzt und entweder Graphit oder Metallpartikel oder einen sonstigen dem Fachmann bekannten Bestandteil umfasst, welcher dazu geeignet ist einen Mehrkomponenten-Kunststoff mit einer hohen Wärmeleitfähigkeit, einer hohe Wärmeformbeständigkeit sowie einer hohen Temperaturfestigkeit herzustellen. Darüber hinaus ist vorgesehen, dass der Gewichtsanteil der zweiten Komponente gegenüber der ersten Komponente mindestens 40% umfasst.
Der Kunststoff kann dabei ein Thermoplast oder auch ein Duroplast sein.

Aufgrund der hohen Wärmeleitfähigkeit des Kunststoffs aus welchem die Kolbenstangenführung ausgebildet ist wird die aufgrund der axialen Bewegungen der Kolbenstange 4 entstehende hohe Temperatur an der Kontaktstelle zwischen der Kolbenstange 4 und der Kolbenstangenführung 1, über die Kolbenstangenführung 1 an das Zylinderrohr 2 übertragen, wodurch die Temperaturbelastung der Kolbenstange 4 deutlich reduziert wird. Der in allen Figuren dargestellte Wärmeleitpfad 10 schemenhaft den Verlauf der Temperaturübertragung von der Kontaktstelle zwischen der Kolbenstange 4 und der Kolbenstangenführung 1 hin zu dem Zylinderrohr 2.

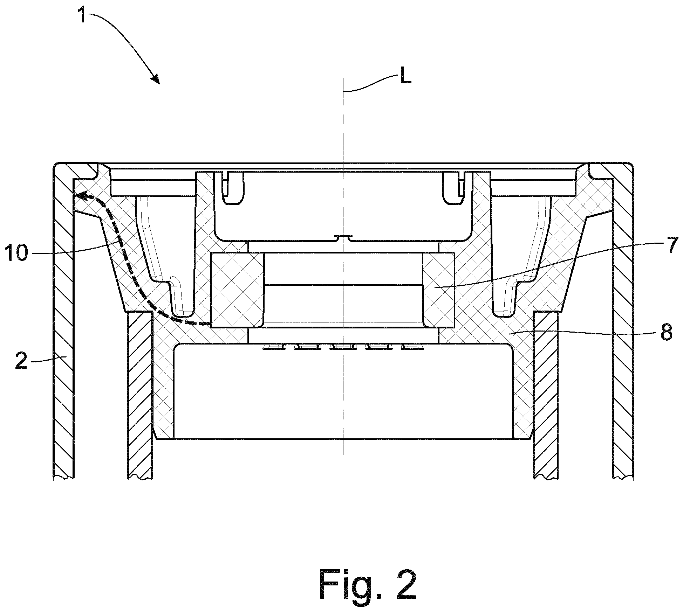

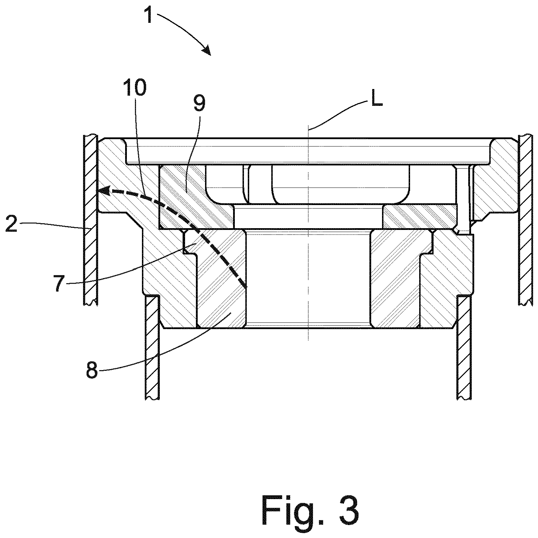

Die Figuren 2 und 3 zeigen jeweils eine Ausführungsvariante der Kolbenstangenführung 1, welche mehrere Kolbenstangenführungsbauteile 7, 8, 9 umfassen. Gemäß der Figur 2 umfasst die Kolbenstangenführung 1 ein erstes Kolbenstangenführungsbauteil 7, sowie ein zweites Kolbenstangenführungsbauteil 8, wobei die Fig. 3 eine ein erstes Kolbenstangenführungsbauteil 7, ein zweites Kolbenstangenführungsbauteil 8, sowie ein drittes Kolbenstangenführungsbauteil 9 umfassende Ausführungsvariante der Kolbenstangenführung 1 zeigt. Der Vorteil dieser Ausführungsvarianten liegt darin, dass hier die einzelnen Kolbenstangenführungsbauteile 7, 8, 9 aus unterschiedlichen Werkstoffen hergestellt und zu einer Kolbenstangenführung 1 zusammengesetzt werden können, wobei das erste Kolbenstangenführungsbauteil 7, welches die Kolbenstange 4 führt bei allen Ausführungsvarianten aus einem Kunststoff gemäß der vorliegenden Erfindung hergestellt ist.

### Bezugszeichen

- 1: Kolbenstangenführung
- 2: Zylinderrohr
- 3: Kraftfahrzeugschwingungsdämpfer
- 4: Kolbenstange
- 5: Kolbenstangenführungsanordnung
- 6: Kolbenstangendichtung
- 7: erstes Kolbenstangenführungsbauteil
- 8: zweites Kolbenstangenführungsbauteil
- 9: drittes Kolbenstangenführungsbauteil
- 10: Wärmeleitpfad

- L: Längsachse

## Patentansprüche

1. Kolbenstangenführung (1) zum Führen und zum gleitenden Lagern einer aus einem Zylinderrohr (2) eines Kraftfahrzeugschwingungsdämpfers (3) zumindest teilweise heraustretenden Kolbenstange (4), wobei die Kolbenstangenführung (1) zumindest abschnittsweise aus einem Kunststoff hergestellt ist, **dadurch gekennzeichnet, dass** das Kunststoff mindestens eine erste Komponente und mindestens eine zweite Komponente umfasst, wobei die erste Komponente des Kunststoffs ein Bindemittel ist und die zweite Komponente des Kunststoffs eine hohe Wärmeleitfähigkeit besitzt.

2. Kolbenstangenführung (1) nach Anspruch 1, **dadurch gekennzeichnet, dass** der Gewichtsanteil der zweiten Komponente gegenüber der ersten Komponente mindestens 40% umfasst

3. Kolbenstangenführung (1) nach Anspruch 1, **dadurch gekennzeichnet, dass** die zweite Komponente Graphit umfasst.

4. Kolbenstangenführung (1) nach Anspruch 1, **dadurch gekennzeichnet, dass** die zweite Komponente Metallpartikel umfasst.

5. Kolbenstangenführung (1) nach Anspruch 1, **dadurch gekennzeichnet, dass** das Kunststoff eine hohe Wärmeformbeständigkeit sowie eine hohe Temperaturfestigkeit aufweist.

6. Kolbenstangenführung (1) nach zumindest einem der vorhergehenden Ansprüche, **dadurch gekennzeichnet, dass** das Kunststoff ein Thermoplast ist.

7. Kolbenstangenführung (1) nach zumindest einem der vorhergehenden Ansprüche, **dadurch gekennzeichnet, dass** das Kunststoff ein Duroplast ist.

8. Kolbenstangenführungsanordnung (5), umfassend eine Kolbenstangenführung (1), sowie eine Kolbenstangendichtung (6), **dadurch gekennzeichnet, dass** die Kolbenstangenführung (1) nach zumindest einem der vorhergehenden Ansprüche ausgeführt ist.

9. Kraftfahrzeugschwingungsdämpfer (3) umfassend eine Kolbenstangenführungsanordnung (5) mit einer Kolbenstangenführung (1), **dadurch gekennzeichnet, dass** die Kolbenstangenführung (1) nach zumindest einem der vorhergehenden Ansprüche ausgeführt ist.
